# EUROPÄISCHE PATENTSCHRIFT

(11) **EP 3 779 229 B1**
(45) Veröffentlichungstag und Bekanntmachung des Hinweises auf die Patenterteilung: **06.10.2021**
(21) Anmeldenummer: 20199255.9
(22) Anmeldetag: 02.03.2017
(51) Int. Cl.: F16D 65/18, F16C 1/00

(54) **KUPPLUNGSRING**
COULING RING
BAGUE D'ACCOUPLEMENT

(30) Priorität: 24.03.2016 DE 102016105611
(43) Veröffentlichungstag der Anmeldung: 17.02.2021
(62) Teilanmeldung aus: 17717618.7
(73) Patentinhaber: BPW Bergische Achsen KG, 51674 Wiehl (DE)
(72) Erfinder: Damberg, Andreas, 51588 Nümbrecht (DE); Klaas, Thomas, 51580 Reichshof (DE); Weber, Udo, 51597 Morsbach (DE)
(74) Vertreter: Christophersen & Partner Partnerschaft mbB Patentanwälte

(56) Entgegenhaltungen:
- BE-A- 369 400
- CN-A- 102 155 528
- CN-A- 102 401 109
- FR-A- 1 560 109
- US-A- 3 486 394
- US-A- 3 593 390

## Beschreibung

Die Erfindung betrifft einen Kupplungsring nach dem Oberbegriff des Patentanspruchs 1, der besonders für die Zustelleinrichtung einer Fahrzeug-Scheibenbremse geeignet ist.

Aus der EP 0 531 321 B1, der WO 2015/117601 A1 und der DE 102 60 597 B sind Fahrzeug-Scheibenbremsen bekannt, die zum Ausgleich des betriebsbedingten Verschleißes an den Bremsbelägen und an der Bremsscheibe mit einer Nachstelleinrichtung versehen sind. Diese passt den Abstand zwischen den Bremsbelägen und der Bremsscheibe entsprechend dem zunehmenden Verschleiß sukzessive an, und hält so dieses sogenannte Lüftspiel in einem konstruktiv vorgegebenen Rahmen. Die Betätigung der Nachstelleinrichtung erfolgt über ein Antriebselement, welches in dem Gehäuse der Scheibenbremse drehbar auf einer zu der Drehachse der Bremsscheibe parallelen Achse angeordnet ist. Das Antriebselement wird durch die Bremszuspanneinrichtung der Scheibenbremse in Drehung versetzt, z. B. durch einen in dem Bremsgehäuse angeordneten Drehhebel, welcher die Bremskraft verstärkt. Das Antriebselement der Nachstelleinrichtung ist auf einer zentral angeordneten Welle drehgelagert. Diese ist an ihrem der Bremsscheibe abgewandten Ende mit Schlüsselflächen versehen, um durch Zurückdrehen der Welle die Nachstelleinrichtung wieder vollständig in die Ausgangsposition zurückzustellen. Dies erfolgt üblicherweise beim Austausch verbrauchter Bremsbeläge gegen neue Bremsbeläge.

Ferner schlägt die FR 1 560 109 A ein kegelförmiges Zahnrad mit Durchgangsbohrung vor, auf dessen Umfang gleichmäßig verteilt angeordnete Rampen angeordnet sind. Des Weiteren sind in der Durchgangsbohrung zur Drehachse hin vorspringende erste und demgegenüber zurückspringende zweite Umfangsabschnitte ausgebildet.

Die Präzision und Zuverlässigkeit der Nachstellung ist wesentlich davon abhängig, dass kein Verkanten der beteiligten Elemente der Nachstelleinrichtung eintritt. Zu diesem Zweck ist bei der EP 0 531 321 B1 die Welle, auf der die Elemente der Nachstelleinrichtung angeordnet sind, so in dem Bremsgehäuse abgestützt, dass sie leichte Pendelbewegungen ausführen kann. Hierzu ist die Welle über ein kardanisches Drehlager in einer Öffnung des Bremsgehäuses abgestützt. Als kardanisches Drehlager dient eine Buchse aus einem inneren Stahlring, einem äußeren Stahlring sowie dazwischen angeordnetem, elastisch verformbarem Material.

Die Zustelleinrichtung nach der EP 0 531 321 B1 ist, was die Nachstelleinrichtung betrifft, aus vielen Bauteilen und Elementen zusammengesetzt, was eine entsprechend aufwendige Montage erfordert.

Der Erfindung liegt die **Aufgabe** zugrunde, den gattungsgemäßen Kupplungsring dahingehend weiterzuentwickeln, dass eine mit dem Kupplungsring versehene Zustelleinrichtung einer Fahrzeug-Scheibenbremse kostengünstiger herstellbar ist und mit weniger Bauteilen auskommt.

Gelöst wird die genannte Aufgabe durch ein entsprechend gestaltetes Bauteil bzw. eine Bauteilgruppe der Zustelleinrichtung, nämlich durch einen Kupplungsring mit den Merkmalen des Patentanspruchs 1.

Zur baulichen Vereinfachung trägt bei, wenn ein Stahlring eines kardanischen Drehlagers gleitbeweglich unmittelbar gegen einen zylindrischen Lagerabschnitt abgestützt ist, mit dem eine Welle versehen ist. Zur baulichen Vereinfachung trägt ferner bei, wenn auf der Achse der Nachstelleinrichtung eine Drehkupplung bestehend aus einem zu der Welle drehfesten ersten Kupplungsteil und einem zu dem Stahlring des kardanischen Drehlagers drehfesten zweiten Kupplungsteil angeordnet ist, wobei das zweite Kupplungsteil der drehbar auf der zentralen Welle gelagerte, separate Kupplungsring ist. Dieser ist vorzugsweise axial beweglich zu dem Stahlring des kardanischen Drehlagers ausgebildet.

Ein axial wirkendes Federelement kann zwischen dem Kupplungsring und dem kardanischen Drehlager angeordnet sein. Als Federelement eignet sich hier insbesondere eine Wellenfeder.

Der Stahlring kann über Formschlusselemente drehfest zu dem Kupplungsring sein. Als Formschlusselemente können an dem Stahlring ausgebildete Arme dienen, die sich in Achsrichtung der Welle erstrecken, wobei diese Arme vorzugsweise durch axial verlaufende Schlitze voneinander getrennt sind.

Die Innenseiten der Arme bilden gemeinsam eine zylindrische Innenkontur, mit der die Arme auf dem zylindrischen Lagerabschnitt der Welle flächig abgestützt sind, so dass eine relativ große Gleitlagerfläche und damit ein besonders reibungsarmes und verschleißunanfälliges Gleiten der beteiligten Flächen erzielt wird.

Zur Teilereduktion trägt bei, wenn das erste Kupplungsteil ein radial erweiterter Bund ist, der einstückig an der Welle angeformt ist. Vorzugsweise ist dieser Bund im Anschluss an den zylindrischen Lagerabschnitt an der Welle angeordnet.

Die zentrale Welle übernimmt vorzugsweise eine Doppelfunktion, indem sie einerseits Elemente der Nachstelleinrichtung aufnimmt und auf einer gemeinsamen Achse positioniert, und indem sie andererseits eine Rückstellerwelle bildet. Zu diesem Zweck ist die Welle mit einer Antriebsstruktur für ein daran ansetzbares Werkzeug versehen, um durch Zurückdrehen der Rückstellerwelle die Nachstelleinrichtung vollständig in deren Ausgangsposition zurückzustellen, was üblicherweise beim Austausch verbrauchter Bremsbeläge gegen neue Bremsbeläge erfolgt. Für eine leichte Zugänglichkeit beim Ansetzen eines entsprechenden Werkzeuges befindet sich die Antriebsstruktur vorzugsweise an dem bremsscheibenabgewandten Ende der Rückstellerwelle.

Bestandteil des kardanischen Drehlagers kann außer dem Gummi- oder Elastomerelement sowie dem inneren Stahlring ein weiterer, außen auf dem Gummi- oder Elastomerring befestigter Stahlring sein, mit dem das kardanische Drehlager in der Öffnung des Gehäuses sitzt.

Um den Bereich der Nachstellung gegen Umwelteinflüsse zu schützen, insbesondere ein Eindringen von Staub oder Feuchtigkeit, ist Bestandteil des kardanischen Drehlagers außerdem eine umlaufende Dichtlippe, die elastisch gegen die Rückstellerwelle abgestützt ist. Vorzugsweise ist die Dichtlippe gegen jenen zylindrischen Lagerabschnitt der Welle abgestützt, gegen den auch das kardanische Drehlager gleit- und drehbeweglich anliegt.

Für die Anordnung der Dichtlippe ist es von Vorteil, wenn der Stahlring des kardanischen Drehlagers derart mit einer Stufe versehen ist, dass er einen Längsabschnitt geringeren Innendurchmessers, mit dem er gegen den zylindrischen Lagerabschnitt der Welle abgestützt ist, und einen Längsabschnitt größeren Innendurchmessers aufweist, an dem sich innen die Dichtlippe befindet. Auch hier liegt der Vorteil in einer Vereinfachung, da das so weiterentwickelte kardanische Drehlager zugleich die Aufgabe der Abdichtung mit übernimmt.

Zur Realisierung der in einer Nachstelleinrichtung notwendigen Funktion einer Einwegekupplung sind die beiden Kupplungsteile mit Kupplungsstrukturen in Gestalt von über den Umfang der Kupplungsteile verteilt angeordneten Zähnen bzw. Rampen versehen. Die Zähne setzen sich, an zumindest einem der beiden Kupplungsteile, aus ersten Flanken, welche die Rampen bilden, und zweiten Flanken zusammen. Die ersten und zweiten Flanken wechseln einander ab, sind zueinander gegenläufig geneigt und weisen erfindungsgemäß eine unterschiedliche Steigung auf. Die stärker geneigten zweiten Flanken sind erforderlich, um die Welle zwecks Rückführung der Nachstelleinrichtung zurückdrehen zu können. Wegen der Steilheit der zweiten Flanken ist dies zwar mit einem erhöhten Drehwiderstand verbunden, der jedoch mit einem entsprechenden Handwerkzeug ohne Weiteres überwunden werden kann. Zudem wird durch diesen erhöhten Drehwiderstand ein versehentliches Zurückstellen der Nachstelleinrichtung sicher verhindert.

Aus fertigungstechnischen Gründen kann es von Vorteil sein, wenn die Anzahl der Rampen an dem zweiten Kupplungsteil, also dem Kupplungsring, ein ganzzahliges Vielfaches der Anzahl der Rampen an dem ersten, unmittelbar an der Welle ausgebildeten Kupplungsteil beträgt. Denn die Herstellung einer relativ feinen Verzahnung mit vielen Rampen führt grundsätzlich zu erhöhten Fertigungskosten. Das Ziel einer ausreichend feinen Teilung bei der Nachstellung der Bremse lässt sich allerdings bereits erreichen, wenn nur einer der beteiligten Kupplungspartner eine feine Verzahnung mit entsprechend vielen Rampen aufweist und ohne dass eine ebenso feine Verzahnung auch an dem anderen Kupplungspartner realisiert ist. Durch die genannte Ausgestaltung wird die Voraussetzung dafür geschaffen, dass sich die Welle in einem relativ preiswerten Fließpressverfahren herstellen lässt. Hingegen ist der die um ein ganzzahliges Vielfaches feinere Verzahnung aufweisende Kupplungsring präziser, nämlich in einem Sinterverfahren hergestellt.

Mit einer weiteren Ausgestaltung wird vorgeschlagen, dass die Kupplungsstrukturen entlang einer bezüglich der Achse der Welle konischen Ringfläche verteilt angeordnet sind. Vorzugsweise beträgt der Konuswinkel der konischen Ringfläche in Bezug auf die Achse der Welle zwischen 55 ° und 65 °_{.}

Bei dem das zweite Kupplungsteil bildenden Kupplungsring ist dessen die Verzahnung bzw. die Rampen aufweisende Ringfläche konisch angeordnet, und die Ringöffnung des Kupplungsrings ist über ihren Umfang mit radial zu der Achse vorstehenden ersten und demgegenüber zurückspringenden zweiten Umfangsabschnitten versehen, die einander abwechseln. Über die ersten Umfangsabschnitte wird die Drehkopplung zwischen dem Kupplungsring und dem kardanischen Drehlager erreicht.

Nachfolgend wird ein Ausführungsbeispiel anhand der Zeichnungen beschrieben und es werden weitere Vorteile angegeben. Es zeigen:
- Fig. 1: einen Längsschnitt durch eine mit einer Nachstelleinrichtung versehene Fahrzeug-Scheibenbremse entlang der Bremszuspannachse;
- Fig.2: die in Fig. 1 mit "ll" bezeichnete Einzelheit in vergrößertem Maßstab;
- Fig. 3: in einer Explosionsdarstellung die Einzelteile der Nachstelleinrichtung;
- Fig. 4: in einer Explosionsdarstellung ein kardanisches Drehlager und, axial getrennt dargestellt, einen erfindungsgemäßen Kupplungsring einer Einwegekupplung, und
- Fig. 5: den erfindungsgemäßen Kupplungsring der Einwegekupplung aus einer anderen Perspektive betrachtet.

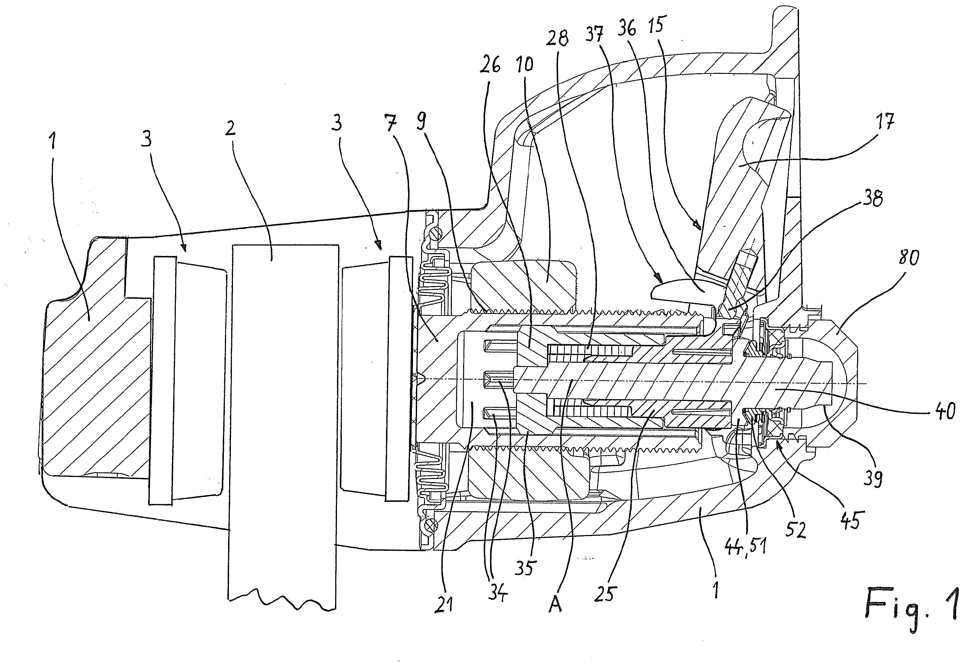

Die Fig. 1 zeigt in einer Übersichtsdarstellung eine druckluftbetätigte Scheibenbremse mit einer integrierten Vorrichtung zum Nachstellen des verschleißbedingten Lüftspiels der Bremse. Eine solche Vorrichtung kommt zum Beispiel in einer für Nutzfahrzeuge bestimmten Gleitsattel-Scheibenbremse zum Ausgleich des mit dem Fahrbetrieb einhergehenden Bremsbelagverschleißes, aber auch des Verschleißes an der Bremsscheibe, zum Einsatz.

Die Nachstelleinrichtung ist, zusammen mit Elementen der Bremszuspannung, in einem Bremsgehäuse 1 angeordnet, welches z. B. der Bremssattel der Scheibenbremse sein kann.

Bestandteil der Scheibenbremse ist ferner die in Fig. 1 ausschnittsweise dargestellte, mit dem Fahrzeugrad verbundene Bremsscheibe 2, gegen die auf jeder ihrer beiden Seiten jeweils ein Bremsbelag 3 arbeitet. Dieser setzt sich in üblicher Weise aus einer Belagrückenplatte und dem eigentlichen Reibbelag zusammen.

Die unmittelbare Beaufschlagung des inneren Bremsbelags 3 mit Bremsdruck erfolgt durch einen gegen diesen Bremsbelag beweglichen Druckstempel 7, der bei der Bremszuspannung gegen die Belagrückenplatte dieses inneren Bremsbelags 3 anliegt. Der Druckstempel 7 steht in einer zur Übertragung der vollen Bremskräfte geeigneten Gewindeverbindung 9 mit einem Druckstück 10, welches längsbeweglich in dem Bremssattel 1 angeordnet ist.

Gegen das Druckstück 10 ist ein Zuspannhebel 15 abgestützt. Der Zuspannhebel 15 ist auf einer zu den Bremsflächen der Bremsscheibe 2 parallelen Schwenkachse in dem Bremsgehäuse 1 gelagert, und er ist mit einem Hebelarm 17 versehen. Gegen den Hebelarm 17 arbeitet das Kraftglied der Fahrzeugbremse. Bei einer druckluftbetätigten Scheibenbremse ist dieses Kraftglied ein Pneumatikzylinder. Die von dem Kraftglied erzeugte Kraft wird über den Hebelarm 17 in ein Schwenken des Zuspannhebels 15 umgesetzt, wodurch es aufgrund der Hebelverhältnisse zu einem die Kraft des Kraftglieds verstärkenden Druck auf das Druckstück 10 kommt. Die Anordnung aus dem Kraftglied, der Hebelanordnung und dem Druckstück bildet die Zuspanneinrichtung der Fahrzeugbremse.

Zur Druckverstärkung arbeitet der Zuspannhebel 15 als ein Exzenter. Dargestellt ist eine gabelförmige Bauart des Zuspannhebels 15. Bei dieser Bauart wird die Betätigungskraft und damit die Bremskraft zu gleichen Teilen und zu beiden Seiten der auf der Achse A zentral angeordneten Nachstelleinrichtung auf das Druckstück 10 übertragen.

In ungebremstem Zustand existiert jeweils ein Abstand (Lüftspiel) zwischen der Bremsscheibe 2 und jedem der beiden Bremsbeläge 3, damit die Teile nicht aneinander schleifen. Zum Ausgleich des durch den Verschleiß an den Belägen und der Bremsscheibe sich immer wieder vergrößernden Lüftspiels dient die Nachstelleinrichtung. Diese ist für eine einfache und kompakte Bauweise der Bremse zumindest teilweise in den zentral im Bremsgehäuse 1 angeordneten Druckstempel 7 integriert. Hierzu ist der Druckstempel 7 mit einem bremsscheibenabgewandt offenen Hohlraum 21 für zumindest Teile der Nachstelleinrichtung versehen. Der Bremsscheibe 2 zugewandt ist der Druckstempel 7 hingegen geschlossen.

Bestandteil der Nachstelleinrichtung ist ein Antriebselement 25, welches innerhalb des Gehäuses der Scheibenbremse auf einer zu der Drehachse der Bremsscheibe parallelen Achse A drehbar angeordnet ist. Das Antriebselement 25 ist während der Bremsbetätigung durch die Zuspanneinrichtung der Bremse und insbesondere durch das Einwirken des Zuspannhebels 15 um die Achse A verdrehbar.

Bestandteile der Nachstelleinrichtung sind ferner ein auf derselben Achse A angeordnetes Nachstellelement 26, sowie ferner eine Übertragungseinrichtung im Bewegungsweg zwischen Antriebselement 25 und Nachstellelement 26. Mittels der Übertragungseinrichtung ist das Nachstellelement 26 durch das Antriebselement 25 sukzessive in jeweils gleichsinnige Drehbewegungen um die Achse A versetzbar. Als Übertragungseinrichtung kommt hier eine Schlingfeder 28 zum Einsatz, die ebenfalls auf der Achse A angeordnet ist.

Das Nachstellelement 26 ist in Bezug auf den umgebenden Druckstempel 7 drehfest, jedoch axial beweglich. Zu diesem Zweck ist der Druckstempel 7 an seiner Innenseite mit Längsnuten 34 versehen, in denen außen an dem Nachstellelement 26 angeformte Vorsprünge oder Nasen 35 längsbeweglich geführt sind. Erreicht wird eine unverdrehbare Längsführung des Nachstellelements 26 relativ zu dem Druckstempel 7. Durch die in Längsrichtung relativ kurzen Nasen 35 kann eine bei der Bremszuspannung nicht vermeidbare, leichte Schwenkbewegung ausgeglichen werden.

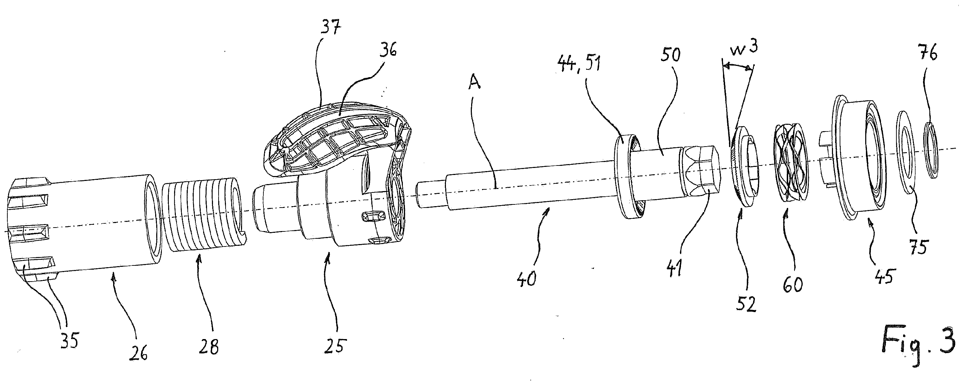

Das Antriebselement 25 ist, bezogen auf das Bremsgehäuse 1, in Längsrichtung der Achse A im Wesentlichen ortsfest angeordnet. Das Antriebselement 25 ist mit einem nach außen abstehenden Arm 37 versehen. Der Arm 37 bildet eine Kulisse 36 (Fig. 3), in die ein an dem Zuspannhebel 15 angeordneter Zapfen 38 eingreift. Die Kulisse 36 an dem Arm 37 und der Zapfen 38 bilden gemeinsam ein Getriebe, über das das Antriebselement 25 durch die Bewegung des Zuspannhebels 15 antreibbar ist. Das Verschwenken des Zuspannhebels 15 führt zu einem Drehen des Antriebselements 25 um die Achse A.

Für eine primär axiale Bauweise der Nachstelleinrichtung befinden sich sowohl das Antriebselement 25 als auch das Nachstellelement 26 auf einer zentral auf der Achse A angeordneten Welle 40. Die Welle 40 ist axial im Wesentlichen unbeweglich in Bezug auf das Gehäuse 1, jedoch drehbeweglich in Bezug auf das Gehäuse 1.

Das Nachstellelement 26 ist fest und insbesondere drehfest mit der Welle 40 verbunden. Das Antriebselement 25 ist drehbeweglich auf der Welle 40 gelagert, und ist zudem drehbar gegenüber dem Nachstellelement 26.

An ihrem der Bremsscheibe 2 abgewandten Ende ist die Welle 40 mit einem Mehrkant 39 als Schlüsselfläche versehen. Daran lässt sich ein Werkzeug ansetzen, um durch Zurückdrehen der Welle 40 die Nachstelleinrichtung wieder vollständig in ihre Ausgangsposition zurückzustellen, was üblicherweise beim Austausch verbrauchter Bremsbeläge gegen neue Bremsbeläge erfolgt. Spätestens nach dem Austausch alter gegen neue Bremsbeläge 3 muss die Nachstellung manuell in ihre Ausgangsstellung zurück gefahren werden. Hierzu wird die Welle 40 und damit zugleich das Nachstellelement 26 und der Druckstempel in einem Drehsinn gedreht werden, der entgegengesetzt der bei der Nachstellung sukzessive eintretenden Drehrichtung ist.

Die Drehbewegung beim Zurückstellen wird nicht auf das Antriebselement 25 übertragen, da sich ein Wendelabschnitt der Schlingfeder 28 in diesem Fall verkleinert, und dieser Wendelabschnitt im Nachstellelement 26 nach Art eines Freilaufs durchrutscht.

Die der Drehübertragung zwischen Antriebselement 25 und Nachstellelement 26 dienende Schlingfeder 28 kann in sich die Funktionen einer Einwegekupplung mit der Funktion einer Überlastkupplung vereinen. Einzelheiten der Schlingfeder 28 und ihrer Funktion sind in der Patentanmeldung WO 2015/117601 A1 beschrieben.

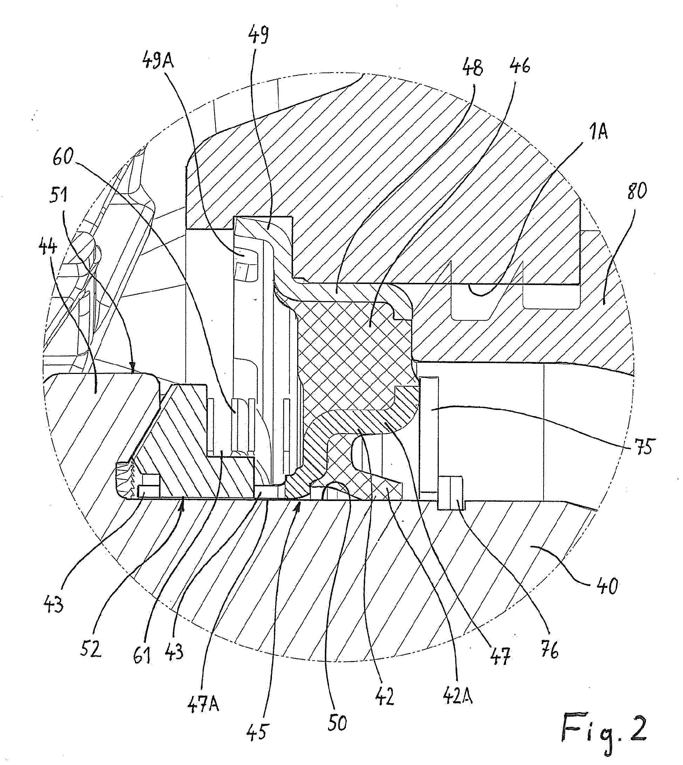

Die Welle 40 ist zweifach gegenüber dem Bremsgehäuse 1 abgestützt, und zwar jeweils mittelbar. Die erste Abstützung erfolgt über das Nachstellelement 26, welches seinerseits in dem Druckstempel 7 geführt ist, der wiederum, über die Gewindeverbindung 9, in dem Druckstück 10 abgestützt ist. Die zweite Abstützung erfolgt an dem anderen, d. h. dem bremsscheibenabgewandten Ende. Dort ist die Welle 40 gemäß Fig. 2 mittelbar, nämlich über ein kardanisches Drehlager 45, in einer runden Öffnung 1A des Bremsgehäuses 1 abgestützt. Das kardanische Drehlager 45 ist als Lagerbuchse so ausgebildet, dass es keine exakt axiale Ausrichtung der Welle 40 erzwingt, stattdessen der Welle 40 ein geringfügiges Pendeln relativ zu dem Gehäuse 1 ermöglicht.

Gemäß Fig. 2 wird dies erreicht, indem Bestandteil des kardanischen Drehlagers 45 ein elastisch verformbarer Gummi- oder Elastomerring 46 ist, an dem innen ein Stahlring 47 befestigt ist, z. B. durch Vulkanisation. Der Stahlring 47 weist eine insgesamt zylindrische Innenkontur auf, die eine zylindrische Gleitlagerfläche 47A bildet, mit der sich der Stahlring 47 gleitbeweglich gegen einen zylindrischen Lagerabschnitt 50 der Welle 40 abstützt.

Bestandteil des als Lagerbuchse gestalteten kardanischen Drehlagers 45 ist außerdem ein äußerer Stahlring 48, der vorzugsweise ebenfalls durch Vulkanisation mit dem Gummi- oder Elastomerring 46 verbunden ist. Mit dem äußeren Stahlring 48 sitzt das kardanische Drehlager 45 in der umgebenden Öffnung 1A des Gehäuses 1. Die beiden Stahlringe 47, 48 haben keinen unmittelbaren Kontakt, da sich zwischen Ihnen das elastisch nachgiebige Material des Gummi- oder Elastomerrings 46 befindet.

Der äußere Stahlring 48 ist mit einem Teil seiner axialen Länge gegen die zylindrische Gehäuseöffnung 1A abgestützt und darin durch Reibschluss fest gehalten. Der Stahlring 48 weist bremsscheibenzugewandt einen Endbereich 49 auf, der zur Reduzierung der Festigkeit mit axial sich erstreckenden Schlitzen 49A versehen ist und leicht nach außen verformt ist. Der Endbereich 49 ermöglicht es, das kardanische Drehlager 45 nach Art einer Rastung hinter einem neben der Gehäuseöffnung 1A ausgebildeten Hinterschnitt im Gehäuse 1 in Längsrichtung zu fixieren.

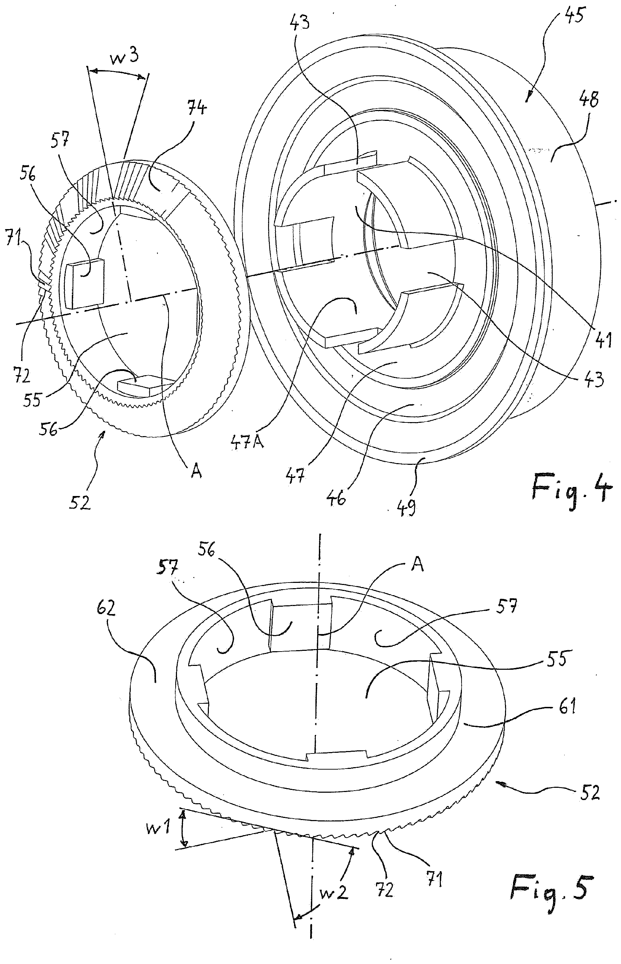

Der innere Stahlring 47 ist derart mit einer Stufe versehen, dass der innere Stahlring 47 einen Längsabschnitt 41 geringeren Innendurchmessers (Fig. 4), an dem sich die Gleitlagerfläche 47A zur Anlage gegen den zylindrischen Lagerabschnitt 50 der Welle befindet, und einen zweiten Längsabschnitt 42 größeren Innendurchmessers aufweist. An dem Längsabschnitt 42 größeren Innendurchmessers ist innen eine Dichtlippe 42A durch Vulkanisation befestigt, die gegenüber dem zylindrischen Lagerabschnitt 50 der Welle 40 abdichtet. Auf diese Weise kann keine Feuchtigkeit und kein Staub in den Bereich der Drehlagerung gelangen. Als Alternative und um eine Vulkanisation zu vermeiden, kann ein Wellendichtring zum Einsatz kommen.

Auf dem Längsabschnitt 41 geringeren Durchmessers ist der Stahlring 47 in Form eines Zylinders axial verlängert und hier mit axial, d. h. parallel zu der Achse A, sich erstreckenden Schlitzen 43 versehen. Infolge der Schlitze 43 weist der Stahlring 47 auf dem Längsabschnitt 41 (Fig. 4) einzelne, durch die Schlitze 43 voneinander getrennte Arme auf, die sich axial erstrecken. Die Innenseiten dieser Arme bilden gemeinsam einen Teil jener zylindrischen Gleitlagerfläche 47A, mit der der Stahlring 47 auf dem zylindrischen Lagerabschnitt 50 der Welle 40 gleitbeweglich ist.

Die durch die Schlitze 43 voneinander getrennten, sich axial erstreckenden Arme weisen an ihren Innenseiten, bei gemeinsamer Betrachtung, eine zylindrische Innenkontur auf, so dass sich hier eine flächige Abstützung auf dem zylindrischen Lagerabschnitt 50 ergibt.

Diese Gestaltung des inneren Stahlrings 47 führt zu relativ großen Kontaktflächen zwischen der an dem Stahlring 47 ausgebildeten Gleitlagerfläche 47A und dem zylindrischen Lagerabschnitt 50 der Welle, wodurch ein gutes Gleitverhalten bei geringer Verschleißanfälligkeit erzielt wird.

Vor allem den Figuren 4 und 5 ist zu entnehmen, dass die Schlitze 43 zusammen mit den so gebildeten Armen Formschlusselemente bilden, durch die eine drehfeste Verbindung des Stahlrings 47 mit einem separaten Kupplungsring 52 erreicht wird. Hierzu ist der Kupplungsring 52 an seiner Ringöffnung 55 mit korrespondierenden Formschlusselementen versehen, nämlich mit abwechselnd nach innen zu der Achse A hin vorspringenden ersten Umfangsabschnitten 56 und demgegenüber zurückspringenden zweiten Umfangsabschnitten 57, die also einander abwechseln. Erzielt wird dadurch eine reine Drehkopplung, die also eine freie Längsbewegung des Kupplungsrings 52 gegenüber dem inneren Stahlring 47 zulässt.

Der Kupplungsring 52 umgibt die Welle 40 und zum Teil auch den Stahlring 47, und bildet den einen Bestandteil einer Drehkupplung, die sich insgesamt aus einem ersten Kupplungsteil 51 und dem Kupplungsring 52 als zweitem Kupplungsteil zusammensetzt. Das erste Kupplungsteil 51 ist hier ein im Vergleich zu dem Lagerabschnitt 50 radial erweiterter, einstückig an der Welle 40 angeformter Bund 44.

Ein Federelement 60, welches als Wellenfeder gestaltet ist, stützt sich einerseits gegen das kardanische Drehlager 45 und hier vorzugsweise gegen dessen inneren Stahlring 47 ab, und andererseits gegen den Kupplungsring 52. Der Kupplungsring 52 ist zu diesem Zweck mit einer umlaufenden Stufe 61 versehen, die die Wellenfeder 60 teilweise aufnimmt und bezüglich der Achse A zentriert. Die Feder stützt sich hierbei gegen eine stirnseitige Ringfläche 62 an der Stufe 61 ab. Die Feder 60 sorgt dafür, dass der Kupplungsring als zweites Kupplungsteil 52 dauernd gegen das an der Welle 40 ausgebildete erste Kupplungsteil 51 vorgespannt ist.

Beide Kupplungsteile 51, 52 sind mit gezahnten Kupplungsstrukturen in Gestalt von gleichmäßig über den Umfang der Kupplungsteile verteilt angeordneten Zähnen bzw. Rampen versehen.

Hierzu zeigt Fig. 5, dass sich die zahnförmigen Kupplungsstrukturen aus ersten Flanken 71, welche die Rampen bilden, und zweiten Flanken 72 zusammensetzen, wobei die ersten Flanken 71 und die zweiten Flanken 72 einander abwechseln, eine einander entgegengesetzte Neigung aufweisen, und vor allem einen unterschiedlichen Neigungs- bzw. Flankenwinkel aufweisen. Denn der Flankenwinkel w1 der die Rampen bildenden ersten Flanken 71 beträgt ca. 30 ° und maximal 45 °_{.} Hingegen beträgt der Flankenwinkel w2 der entgegengesetzten Flanken 72 zwischen 60 ° und 80 ° und vorzugsweise 70 °

Die flacheren Flanken 71 sind von Bedeutung bei der Nachstellung, indem die Zähne sukzessive entsprechend dem Verschleiß der Scheibenbremse wandern, wobei die Rampen aneinander aufsteigen und, im Fall der Überwindung der Rampen, um einen Zahn weiterschalten, womit die Nachstellung durchgeführt ist.

Die steileren Flanken 72 hingegen haben bei der Nachstellung keine direkte Bedeutung, sondern sie dienen insoweit nur als Rastungen, sperren also gegen ein ungewolltes Zurückdrehen.

Andererseits sind die zweiten Flanken 72 zumindest soweit geneigt, dass sie bei bewusster erhöhter Kraftausübung überwindbar sind. Dies ist der Fall bei der Rückstellung der Nachstelleinrichtung durch Drehen der Welle 40 mittels eines an dessen Mehrkant 39 angesetzten Werkzeugs. Über das Werkzeug lässt sich genügend Drehmoment aufbauen, um die aus den Kupplungsteilen 51, 52 bestehende Drehkupplung entgegen dem Nachstellsinn zurückzudrehen. Dies gelingt, wenn der zweite Flankenwinkel w2 zwischen 60 ° und 80 ° beträgt.

Von Vorteil ist, dass die Ringflächen mit den Kupplungstrukturen nicht rechtwinklig zu der Achse A angeordnet sind, sondern geneigt. Hierzu ist die Ringfläche 74 des Kupplungsrings 52, an der die Zähne bzw. Rampen ausgebildet sind, entsprechend dem eingetragenen Winkel w3 konisch angeordnet. Auch das andere Kupplungsteil 51, d. h. die unmittelbar an dem Bund 44 der Welle ausgebildete Verzahnung, weist den Winkel w3 auf.

Vorzugsweise beträgt der zwischen der Ringfläche 74 und der Achse A gemessene Konuswinkel zwischen 55 ° und 65 °_{.}

Herstellungstechnisch ist von Vorteil, wenn die Anzahl der Zähne bzw. Rampen an dem zweiten Kupplungsteil 52 ein ganzzahliges Vielfaches der Anzahl der Zähne bzw. Rampen an dem ersten Kupplungsteil 51 beträgt. Dies ist Voraussetzung, um die Welle 40 preisgünstig in einem Fließpressverfahren herzustellen, in dem sich sehr feine Strukturen nicht ohne weiteres fertigen lassen.

Nur der Kupplungsring 52, der die demgegenüber feinere Verzahnung mit einer Teilung, d.h. einem Zahnabstand, von zum Beispiel nur 3,6 ° aufweist, erfordert ein Herstellungsverfahren, welches feinere Strukturen ermöglicht. Insoweit geeignet ist zum Beispiel ein Sinterverfahren.

Zur axialen Festlegung der Welle 40 an dem kardanischen Drehlager 45 stützt sich der innere Stahlring 47 gegen eine Ringscheibe 75 ab, die wiederum durch einen Sicherungsring 76 gesichert ist, welcher in einer Nut auf dem Außenumfang der Welle 40 sitzt.

Eine aus einem Weichkunststoff bestehende Kappe 80 lässt sich von außen auf die Gehäuseöffnung 1A aufsetzen, um diese zusätzlich zu verschließen. Diese Verschlusskappe 80 trägt dazu bei, ein Eindringen von Feuchtigkeit und Staub in den Bereich der Drehlagerung und ebenso in den Bereich der Nachstellung zu verhindern.

### Bezugszeichenliste

- 1: Gehäuse, Bremssattel
- 1A: Gehäuseöffnung
- 2: Bremsscheibe
- 3: Bremsbelag
- 7: Druckstempel
- 9: Gewindeverbindung
- 10: Druckstück
- 15: Zuspannhebel
- 17: Hebelarm
- 21: Hohlraum
- 25: Antriebselement
- 26: Nachstellelement
- 28: Schlingfeder
- 34: Längsnut
- 35: Nase
- 36: Kulisse
- 37: Arm
- 38: Zapfen
- 39: Mehrkant
- 40: Welle
- 41: Längsabschnitt
- 42: Längsabschnitt
- 42A: Dichtlippe
- 43: Schlitz
- 44: Bund
- 45: kardanisches Drehlager
- 46: Gummi- oder Elastomerring
- 47: Stahlring
- 47A: Gleitlagerfläche
- 48: Stahlring
- 49: Endbereich
- 49A: Schlitz
- 50: Lagerabschnitt
- 51: erstes Kupplungsteil
- 52: zweites Kupplungsteil, Kupplungsring
- 55: Ringöffnung
- 56: Umfangsabschnitt
- 57: Umfangsabschnitt
- 60: Federelement, Wellenfeder
- 61: Stufe
- 62: stirnseitige Ringfläche
- 71: Flanke
- 72: Flanke
- 74: Ringfläche
- 75: Ringscheibe
- 76: Sicherungsring
- 80: Kappe, Verschlusskappe

- A: Achse
- w1: Flankenwinkel
- w2: Flankenwinkel
- w3: Konuswinkel

## Patentansprüche

1. Kupplungsring (52) mit einer Ringöffnung, einer stirnseitigen Ringfläche (62) und mindestens einer weiteren Ringfläche (74), die mit Kupplungsstrukturen in Gestalt von gleichmäßig über den Umfang verteilt angeordneten Rampen (71) versehen ist, wobei die weitere Ringfläche (74) konisch in Bezug auf die Achse (A) des Rings angeordnet ist, und dass die Ringöffnung über ihren Umfang mit radial zu der Achse (A) vorspringenden ersten (56) und demgegenüber zurückspringenden zweiten (57) Umfangsabschnitten versehen ist, die einander abwechseln, **dadurch gekennzeichnet, dass** sich die Kupplungsstrukturen aus ersten Flanken (71), welche die Rampen bilden, und zweiten Flanken (72) zusammensetzen, und dass die ersten und zweiten Flanken einander abwechseln, zueinander gegenläufig geneigt sind und eine unterschiedliche Steigung aufweisen.

2. Kupplungsring nach Anspruch 1, **dadurch gekennzeichnet, dass** die ersten (56) und die zweiten (57) Umfangsabschnitte jeweils dieselbe Breite in Umfangsrichtung aufweisen.

3. Kupplungsring nach Anspruch 1 oder 2, **dadurch gekennzeichnet, dass** der Konuswinkel zu der Achse (A) 55 ° - 65 ° beträgt.

4. Kupplungsring nach einem der vorhergehenden Ansprüche, **dadurch gekennzeichnet, dass** der Flankenwinkel (w1) der ersten Flanken (71) maximal 45° beträgt, und der Flankenwinkel (w2) der zweiten Flanken (72) 60 ° bis 80 ° beträgt.

5. Kupplungsring nach einem der Ansprüche 1 - 4, **dadurch gekennzeichnet, dass** dieser in einem Sinterverfahren hergestellt ist.

## Claims

1. Coupling ring (52) having a ring opening, an end-side ring face (62) and at least one further ring face (74), which further ring face is provided with coupling structures in the form of ramps (71) that are arranged in a manner distributed uniformly around the circumference, wherein the further ring face (74) is arranged in a conical manner with respect to the axis (A) of the ring, and in that the ring opening is provided, around its circumference, with first circumferential portions (56) that protrude radially with respect to the axis (A) and with second circumferential portions (57) that are set back with respect thereto, which alternate with one another, **characterized in that** the coupling structures are composed of first flanks (71), which form the ramps, and second flanks (72), and **in that** the first and second flanks alternate with one another, are inclined in opposite directions to one another and have a different gradient.

2. Coupling ring according to Claim 1, **characterized in that** the first circumferential portions (56) and the second circumferential portions (57) each have the same width in the circumferential direction.

3. Coupling ring according to Claim 1 or 2, **characterized in that** the cone angle with respect to the axis (A) is 55° - 65°.

4. Coupling ring according to one of the preceding claims, **characterized in that** the flank angle (w1) of the first flanks (71) is at most 45°, and the flank angle (w2) of the second flanks (72) is from 60° to 80°.

5. Coupling ring according to one of Claims 1 - 4, **characterized in that** said coupling ring is produced in a sintering process.

## Revendications

1. Bague d'accouplement (52) comportant une ouverture de bague, une surface de bague côté frontal (62) et au moins une autre surface de bague (74) qui est pourvue de structures d'accouplement sous la forme de rampes (71) uniformément réparties sur la circonférence, l'autre surface de bague (74) étant disposée de manière conique par rapport à l'axe (A) de la bague, et en ce que l'ouverture de bague est pourvue sur sa circonférence de premières portions de circonférence (56) saillant radialement par rapport à l'axe (A) et de deuxièmes portions de circonférence (57) en retrait des premières, lesquelles portions alternent les unes avec les autres, **caractérisée en ce que** les structures d'accouplement se composent de premiers flancs (71), qui forment les rampes, et de deuxièmes flancs (72), et **en ce que** les premiers et deuxièmes flancs alternent les uns avec l'autres, sont inclinés dans des directions opposées et présentent des pentes différentes.

2. Bague d'accouplement selon la revendication 1, **caractérisée en ce que** les premières (56) et deuxièmes (57) portions de circonférence ont la même largeur dans la direction circonférentielle.

3. Bague d'accouplement selon la revendication 1 ou 2, **caractérisée en ce que** l'angle du cône par rapport à l'axe (A) est de 55 à 65°.

4. Bague d'accouplement selon l'une des revendications précédentes, **caractérisée en ce que** l'angle de flanc (w1) des premiers flancs (71) est de 45° maximum, et l'angle de flanc (w2) des deuxièmes flancs (72) est de 60° à 80°.

5. Bague d'accouplement selon l'une des revendications 1 à 4, **caractérisée en ce qu'**elle est fabriquée par un procédé de frittage.
